# EUROPEAN PATENT APPLICATION

(11) **EP 1 949 942 A1**
(43) Date of publication of application: **30.07.2008**
(21) Application number: 06811211.9
(22) Date of filing: 04.10.2006
(51) Int. Cl.: A63F 13/00, A63F 13/08, A63F 13/12

(54) **PORTABLE GAME MACHINE AND GAME SYSTEM**

(30) Priority: 21.10.2005 JP 2005307605
(71) Applicant: Bandai Co., Ltd., Tokyo 111-8081 (JP)
(72) Inventor: ORIHARA, Takaaki, Tokyo 111-8081 (JP); HAMANA, Yuichi, Tokyo 111-8081 (JP)
(74) Representative: Nicholls, Michael John
(86) International application number: PCT/JP2006/319871
(87) International publication number: WO 2007/046238

(57) **Abstract**

A portable game apparatus which gains the acceptance of senior elementary school children is realized. A portable game apparatus includes, for example, a general-purpose interface used to connect a personal computer, and a communication interface used to communicate with another portable game apparatus as an opponent of a fighting game. An execution control unit executes the fighting game with the other portable game apparatus connected via the communication interface using game data received via the general-purpose interface.

## Description

### TECHNICAL FIELD

The present invention relates to a portable game apparatus.

### BACKGROUND ART

In recent years, arcade game machines that use cards printed with barcodes have been prevalent. Since game characters and the like are printed on these cards, a hobby of making a collection of such cards is prevalent. Especially, these arcade game machines are popular with kindergarten and early elementary school children.

However, these arcade game machines using cards are not so popular with senior elementary school children. This is because senior elementary school children may feel juvenile with playing the arcade game machines using cards.

For this reason, the marker requires game apparatuses which gain the acceptance of senior elementary school children. For example, if portable game apparatuses which are worth having, or those which cooperate with personal computers and the like are realized, they will gain the acceptance of those children.

A memory card which is connected to a home computer game machine and comprises a liquid crystal display and operation buttons has been proposed. Furthermore, this memory card comprises a dedicated connector to be connected to a home computer game machine main body.
Patent Reference 1: Japanese Patent Laid-Open No. 2000-200250
Patent Reference 2: Japanese Patent Laid-Open No. 2002-530017
Patent Reference 3: Japanese Patent Laid-Open No. 2002-516734

### DISCLOSURE OF INVENTION

### PROBLEMS THAT THE INVENTION IS TO SOLVE

Since the aforementioned memory card is premised on the use upon connection to the corresponding home computer game machine, it cannot be connected to a generally prevalent personal computer.

In general, since expert knowledge is required to use a PC, it is difficult for a kindergarten or early elementary school children to use the PC alone. Conversely, of senior elementary school children, those who can use the PCs are increasing. However, there is no novel game using the PC.

On the other hand, game apparatuses named PlayStation^{®} Portable have prevailed. This game apparatus comprises an IrDA interface, IEEE802.11b interface, and USB interface. However, there is no game software which allows this game apparatus to fight with an opponent game apparatus via the IrDA or IEEE802.11b interface using game data received from a PC connected via the USB interface.

It is, therefore, an object of the present invention to solve at least one of these problems and other problems. Note that other problems will be understood throughout the specification.

### MEANS OF SOLVING THE PROBLEMS

The present invention can be implemented as, for example, an apparatus, system, method, or computer program. A first portable game apparatus, for example, comprises:
a general-purpose interface adapted to connect a personal computer;
a communication interface adapted to communicate with another game apparatus as an opponent of a fighting game;
a storage unit adapted to store game data received via the general-purpose interface;
an execution control unit adapted to execute the fighting game using the game data with the other portable game apparatus connected via the communication interface;
an input unit adapted to input at least an instruction associated with the fighting game; and
a display unit adapted to display at least execution contents of the fighting game.

A second portable game apparatus according to the first portable game apparatus, wherein the general-purpose interface is a USB interface.

A third portable game apparatus according to the first or second portable game apparatus wherein the game data is at least one of character data, item data, and special effect data in the fighting game.

A fourth portable game apparatus according to the third portable game apparatus wherein execution control unit exchanges or moves game data with the other portable game apparatus connected via the communication interface.

A fifth portable game apparatus according to any one of the first to fourth portable game apparatuses wherein a total size of all game data available in the fighting game exceeds a storage capacity of the storage unit, and
game data which cannot be stored in the storage unit of the game data are stored in a storage device of the personal computer connected via the general-purpose interface, and the personal computer moves arbitrary game data stored in the storage unit of the game apparatus to the storage device of the personal computer, thereby storing arbitrary other game data stored in the storage device of the personal computer in the storage unit.

A sixth portable game apparatus according to any one of the first to fifth portable game apparatuses wherein the fighting game is a game in which a parameter of a player is changed along with progress of the game, and a team which is organized by the player and includes one or more game characters fights with another team in the other portable game apparatus, and
upon organizing the team, the execution control unit calculates a total value of levels given in advance to the game characters to be included in the team to be organized, and permits the player to select the game characters within a range in which the total value is not more than the parameter of the player.

A seventh portable game apparatus according to the sixth portable game apparatus wherein the parameter is determined using at least one of an experience value of the player, the number of fights; and a fight record. Note that the parameter may be the experience value itself of the player, the number of fights itself, or the fight record itself.

An eighth portable game apparatus according to any one of the first to seventh portable game apparatuses wherein the execution control unit changes a rate of rise of a parameter of a player according to times.

A ninth portable game apparatus according to the eighth portable game apparatus wherein the execution control unit lowers the rate of rise compared to other times at a time which belongs to at least one of school hours and cram school hours.

A 10th portable game apparatus according to any one of the first to ninth portable game apparatuses wherein the execution control unit sets a display direction of the display unit to agree with a first direction upon inputting an instruction to the fighting game, and sets the display direction of the display unit to agree with a second direction different from the first direction upon fighting with the other portable game apparatus.

An 11th portable game apparatus according to the 10th portable game apparatus wherein the first direction and the second direction are different through approximately 90°.

A 12th portable game apparatus according to the 10th portable game apparatus wherein the second direction is a direction in which the communication interface faces a communication interface of the other portable game apparatus.

A 13th portable game apparatus according to any one of the 10th to 12th portable game apparatuses wherein the first direction agrees with a horizontally long direction of the display unit, and the second direction agrees with a vertically long direction of the display unit.

A 14th portable game apparatus according to any one of the first to 13th portable game apparatuses wherein a weight of the portable game apparatus is less than 150 grams and is not less than 5 grams to include a battery.

A 15th portable game apparatus according to any one of the first to 14th portable game apparatuses wherein a largest value of a width, height, and depth as a size of the portable game apparatus is less than 170 mm and is not less than 50 mm.

A 16th portable game apparatus according to any one of the first to 15th portable game apparatuses wherein the portable game apparatus is a USB memory type game apparatus.

A first game system, which comprises one of the first to 16th portable game apparatuses, a personal computer to which the portable game apparatus is connected, and a server apparatus connected to the personal computer, wherein
the personal computer comprises:
a unit for, when the portable game apparatus is connected, reading out a parameter which is changed along with progress of a fighting game from the portable game apparatus;
a unit for transmitting the parameter to the server apparatus; and
a unit for displaying a Web page received from the server apparatus, and
the server apparatus comprises a unit for transmitting Web pages which are different depending on reception and non-reception of the parameter to the personal computer.

A second game system, which comprises one of the first to 16th portable game apparatuses, a personal computer to which the portable game apparatus is connected, and a server apparatus connected to the personal computer, wherein
the personal computer comprises:
a unit for, when the portable game apparatus is connected, reading out an experience value which is changed along with progress of a fighting game from the portable game apparatus;
a unit for accessing a Web page according to the experience value of a plurality of Web pages provided by the server apparatus; and
a unit for displaying the Web page, and
the server apparatus comprises:
   a unit for transmitting the plurality of Web pages according to the experience value to the personal computer.

A third game system according to the first or second game system wherein the Web page according to the experience value is a Web page which can be accessed by only players having identical or approximate experience values.

A fourth game system according to any one of the first to third game systems wherein Web page according to the experience value includes an image having a relatively higher resolution than game data displayed on a display unit of the portable game apparatus in association with the game data associated with the portable game apparatus.

A fifth game system is a game system, which comprises one of the first to 13th portable game apparatuses, a personal computer to which the portable game apparatus is connected, and a server apparatus connected to the personal computer, wherein
the personal computer comprises:
a unit for, when the portable game apparatus is connected, transmitting predetermined information read out from the portable game apparatus or connected information indicating that the portable game apparatus is connected to the server apparatus; and
a unit for displaying a Web page received from the server apparatus, and
the server apparatus comprises:
   a unit for, when the predetermined information or the connected information is received, transmitting a first Web page to the personal computer, and for, when the predetermined information or the connected information is not received, transmitting a second Web page different from the first Web page.

A sixth game system according to any one of the first to fifth game systems wherein the Web page includes a brochure of the game data.

A seventh game system according to any one of the first to fifth game systems wherein the server apparatus further comprises storage unit for storing the game data, and
the personal computer further comprises:
a unit for downloading game data read out from the storage unit of the server apparatus; and
a unit for writing the downloaded game data in the portable game apparatus.

An eighth game system according to the seventh game system wherein the Web page includes information of a download ranking associated with the game data.

A ninth game system according to any one of the first to eighth game systems wherein the personal computer is a portable phone.

A computer program for a portable game apparatus, is **characterized by** comprising:
a step of receiving game data used in a fighting game from a personal computer via a general-purpose interface;
a step of storing the game data received via the general-purpose interface in a storage unit;
a step of communicating with another portable game apparatus as an opponent of the fighting game via a communication interface;
a step of executing the fighting game using the game data with the other portable game apparatus connected via the communication interface;
a step of inputting at least an instruction associated with the fighting game via an input unit; and
a step of displaying at least execution contents of the fighting game.

A first computer program is a computer program, which is executed by a personal computer connected to a portable game apparatus, **characterized by** comprising:
a step of reading out, when the portable game apparatus is connected, a parameter which is changed along with progress of a fighting game from the portable game apparatus using read-out unit;
a step of transmitting, using transmission unit, the parameter to a server apparatus which transmits Web pages that are different between a case in which the server apparatus is connected to the personal computer and receives the parameter, and a case in which the server apparatus does not receive the parameter; and
a step of displaying, using display unit, a Web page received from the server apparatus.

A second computer program is a computer program, which is executed by a personal computer connected to a portable game apparatus, **characterized by** comprising:
a step of reading out, when the portable game apparatus is connected to the personal computer, an experience value from the portable game apparatus using read-out unit;
a step of accessing a Web page according to the experience value using access unit of a plurality of Web pages provided by a server apparatus connected to the personal computer; and
a step of displaying the Web page using display unit.

A third computer program is a computer program, which is executed by a personal computer connected to a portable game apparatus, **characterized by** comprising:
a step of detecting, using detection unit, whether or not the portable game apparatus is connected to the personal computer;
a step of transmitting, when the portable game apparatus is connected to the personal computer, predetermined information read out from the portable game apparatus or connected information indicating that the portable game apparatus is connected, using transmission unit, to a server apparatus which transmits a first Web page to the personal computer when the server apparatus receives the predetermined information read out from the portable game apparatus or the connected information indicating that the portable game apparatus is connected, and transmits a second Web page different from the first Web page to the personal computer when the server apparatus does not receive the predetermined information or the connected information; and
a step of displaying the Web page received from the server apparatus using display unit.

A method of executing a fighting game in a portable game apparatus, is **characterized by** comprising:
a step of receiving game data used in a fighting game from a personal computer via a general-purpose interface;
a step of storing the game data received via the general-purpose interface in a storage unit;
a step of communicating with another portable game apparatus as an opponent of the fighting game via a communication interface;
a step of executing the fighting game using the game data with the other portable game apparatus connected via the communication interface;
a step of inputting at least an instruction associated with the fighting game via an input unit; and
a step of displaying at least execution contents of the fighting game.

A first Web page display method is a display method of a Web page, which is executed by a personal computer connected to a portable game apparatus, **characterized by** comprising:
a step of reading out, when the portable game apparatus is connected, a parameter which is changed along with progress of a fighting game from the portable game apparatus using read-out unit;
a step of transmitting, using transmission unit, the parameter to a server apparatus which transmits Web pages that are different between a case in which the server apparatus is connected to the personal computer and receives the parameter, and a case in which the server apparatus does not receive the parameter; and
a step of displaying, using display unit, a Web page received from the server apparatus.

A second Web page display method is a display method of a Web page, which is executed by a personal computer connected to a portable game apparatus, **characterized by** comprising:
a step of reading out, when the portable game apparatus is connected to the personal computer, an experience value from the portable game apparatus using read-out unit;
a step of accessing a Web page according to the experience value using access unit of a plurality of Web pages provided by a server apparatus connected to the personal computer; and
a step of displaying the Web page using display unit.

A third Web page display method is a display method of a Web page, which is executed by a personal computer connected to a portable game apparatus, **characterized by** comprising:
a step of detecting, using detection unit, whether or not the portable game apparatus is connected to the personal computer;
a step of transmitting, when the portable game apparatus is connected to the personal computer, predetermined information read out from the portable game apparatus or connected information indicating that the portable game apparatus is connected, using transmission unit, to a server apparatus which transmits a first Web page to the personal computer when the server apparatus receives the predetermined information read out from the portable game apparatus or the connected information indicating that the portable game apparatus is connected, and transmits a second Web page different from the first Web page to the personal computer when the server apparatus does not receive the predetermined information or the connected information; and
a step of displaying the Web page received from the server apparatus using display unit.

### EFFECTS OF THE INVENTION

The first portable game apparatus not only comprises the interface used to execute the fighting game and the interface used to connect the PC but also executes the fighting game using game data written from the PC. Hence, a portable game apparatus that gains the acceptance of senior elementary school children can be implemented. Note that the aforementioned computer program for the portable game apparatus and the execution method of a fighting game can obtain the same effects.

Since the second portable game apparatus adopts the USB interface as a standard interface of personal computers, it is easily accepted in the market.

The third portable game apparatus can receive game characters, item data, special effect data, and the like from the computer, and can use them. In the conventional fighting game, game data are fixed when a computer program is written in a storage medium. By contrast, in the present invention, since the fighting game can be executed by receiving new game data and the like from the computer, the user of the portable game apparatus can enjoy changes of game data that he or she has never experienced.

According to the fourth portable game apparatus, the game data can be exchanged with or moved to another portable game apparatus. For this reason, the game data can be transferred to or received from a third party. When the worth of each game data changes depending on the progress of the fighting game or the attribute of the game apparatus, it is significant for the player to be able to exchange or move the game data.

According to the fifth portable game apparatus, when all game data cannot be written in the portable game apparatus due to a wide variety of game data, other game data can be written from the PC by moving the game data to the PC. Hence, the player can enjoy the pleasure of careful selection of game data to be held in the portable game apparatus.

According to the sixth portable game apparatus, upon execution of the fighting game of a team competition format, game characters that can be included in a team can be selected according to the parameter of the player. Hence, if the parameter increases along with the progress of the game, the player can organize a stronger team, and can enjoy the pleasure of an increase in degree of freedom in organization.

According to the seventh portable game apparatus, the parameter can be a value calculated according to the experience value of the player, the number of fights, fight record, and the like. Since these values are changed depending on the results of the game, winning the game may enhance the pleasure. For example, if the degree of freedom in organization increases with increasing number of wins of the game, the pleasure of the fighting game is enhanced.

According to the eighth portable game apparatus, since the rate of rise of the parameter of the player is changed depending on the time, the player may explore, for pleasure, a time at which the rate of rise of the parameter is high.

According to the ninth portable game apparatus, since the rate of rise of the parameter lowers during school hours and cram school hours, the player falls out of playing at inappropriate times. That is, compared to a case in which the rate of rise does not depend on the times, the player can attend to lessons.

According to the 10th portable game apparatus, the display direction upon inputting instructions (example: a team organization instruction) of the fighting game is set to be different from that during fighting with another game apparatus. In this way, the display direction suited to the fighting can be adopted during fighting while assuring easy input of instructions, and high visibility of display.

According to the 11th portable game apparatus, since the display direction upon inputting instructions is set to be different from that during fighting through about 90°. Especially, when the display device has a horizontally or vertically elongated shape, easy input and high visibility of display can be assured.

According to the 12th portable game apparatus, since the display direction is defined so that the communication interface of the self apparatus opposes that of the opponent game apparatus during fighting, high visibility can be assured while reducing the probability of errors.

According to the 13th portable game apparatus, since the display unit has a horizontally elongated shape upon inputting instructions, the number of breaks upon writing characters horizontally can be minimized.

According to the 14th portable game apparatus, since the weight of the portable game apparatus is set to be less than 150 grams and to be not less than 5 grams to include the battery, the apparatus is easy to carry even for elementary school children. The weights of recent portable phones fall within the range from about 78 grams to 143 grams. The weight of a USB memory is about 9 grams. Hence, when the weight is less than 150 grams and 5 grams, even elementary school children can easily carry the apparatus. Such weight is easily realized upon design as the USB type game apparatus.

According to the 15th portable game apparatus, since the largest value of the width, height, and depth as the size of the portable game apparatus is less than 170 mm and not less than 50 mm, the game apparatus which is easy to carry can be realized.

According to the first and second game systems, the Web page can be displayed according to the parameter (example: experience value and the like) which is read out from the portable game apparatus and is changed according to the progress of the fighting game. In this manner, information to be provided and the situations of communications can be limited according to the parameter. Note that the first and second Web page display methods and the first and second computer programs can provide the same effects.

According to the third game system, since a Web page which can be accessed by only players having identical or approximate parameters is provided, a problem posed when a player who does not have an identical or nearly equal parameter uses the identical Web site can be solved.

According to the fourth game system, by providing high-resolution images about the game data, the player is more fascinated by the game data. The display unit of the portable game apparatus is difficult to display high-resolution images compared to that of the PC. Especially, as the size and weight of the portable game apparatus are reduced, it becomes harder to display high-resolution images. Hence, the portable game apparatus can only display plain images of the game data, but the PC displays high-resolution images about the game data, thus allowing the player to recognize the features of the game data.

According to the fifth game system, since different Web pages are displayed depending on whether or not the portable game apparatus is connected to the PC, the player can enjoy collaboration between the portable game apparatus and PC. Note that the third computer program and third Web page display method can provide the same effects.

According to the sixth game system, since the brochure of the game data is provided on the Web page, the player can find various other game data which are not stored in the portable game apparatus. As a result, the player is fascinated by game data that he or she does not have.

According to the seventh game system, since game data are downloaded from the server apparatus and are stored in the portable game apparatus, the player can acquire the latest game data. Especially, since the player purchases game data via the server apparatus, he or she can easily add new game data to the portable game apparatus.

According to the eighth game system, the player can find popular and unpopular game characters on the Web page. For example, the player can easily select game data to be downloaded by checking the download ranking.

According to the ninth game system, since the portable phone is used in place of the PC, the player can manage the portable game apparatus and can access the Web site at a place other than home.

Other features and advantages of the present invention will be apparent from the following description taken in conjunction with the accompanying drawings, in which like reference characters designate the same or similar parts throughout the figures thereof.

### BRIEF DESCRIPTION OF DRAWINGS

Fig. 1 is a view showing an example of a portable game apparatus according to an embodiment;
Fig. 2 is a functional block diagram of the portable game apparatus according to the embodiment
Fig. 3 is a diagram showing an overview of a game system according to the embodiment;
Fig. 4 is an exemplary functional block diagram showing a PC and server apparatus according to the embodiment;
Fig. 5 is an exemplary flowchart showing basic processing of the portable game apparatus according to the embodiment;
Fig. 6 shows a display example of a menu according to the embodiment;
Fig. 7 is an exemplary flowchart showing team organization processing according to the embodiment;
Fig. 8 shows an example of a menu of the team organization processing according to the embodiment;
Fig. 9 shows an example of a monster selection screen according to the embodiment;
Fig. 10 shows an example of game characters according to the embodiment;
Fig. 11 shows an example of a player profile according to the embodiment;
Fig. 12 is an exemplary flowchart showing battle processing according to the embodiment;
Fig. 13 shows a connection example of game apparatuses and a display example on their screens upon execution of a fighting game according to the embodiment;
Fig. 14 is an exemplary flowchart showing transfer or exchange processing of game data according to the embodiment;
Fig. 15 is an exemplary flowchart showing move processing of game data according to the embodiment;
Fig. 16 is an exemplary flowchart showing access processing to a Web page according to the embodiment;
Fig. 17 is an exemplary flowchart showing information providing processing in a server apparatus according to the embodiment;
Fig. 18 shows an example of a Web page in accordance with an experience value according to the embodiment;
Fig. 19 shows another example of a Web page according to the embodiment;
Fig. 20 shows still another example of a Web page according to the embodiment;
Fig. 21 is another exemplary flowchart showing the Web page providing processing according to the embodiment; and
Fig. 22 is another exemplary flowchart showing the access processing according to the embodiment.

### BEST MODE FOR CARRYING OUT THE INVENTION

One embodiment of the present invention will be described hereinafter. Each individual embodiment to be described hereinafter will help understanding of various concepts, i.e., the broader concept, medium concept, narrower concept, and the like of the present invention. Also, the technical scope of the present invention is settled by the scope of the claims, and is not limited to each individual embodiment to be described hereinafter.

### <Outer Appearance of Portable Game Apparatus>

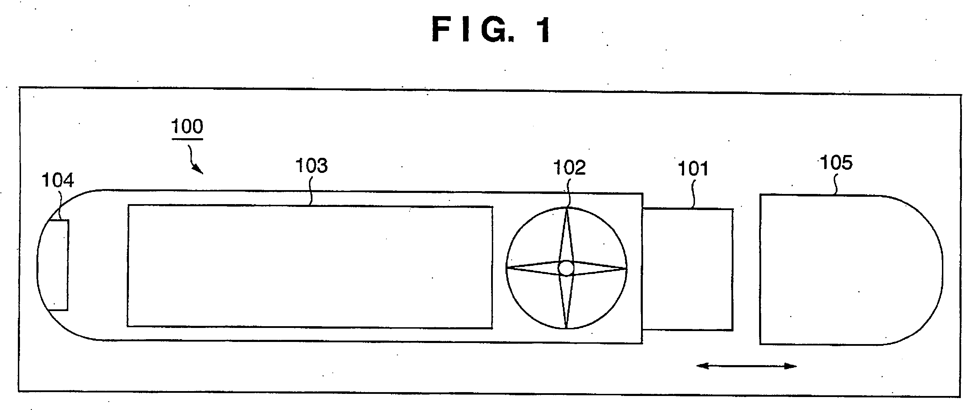

Fig. 1 shows an example of a portable game apparatus according to an embodiment. This portable game apparatus (to be referred to as a game apparatus hereinafter) 100 comprises a USB (Universal Serial Bus) connector 101 as a general-purpose interface used to establish connection to a PC. An operation button 102 can be operated in four to eight directions. By pressing a part near the center of the operation button 102, a decision instruction and the like can be input.

A display unit 103 is a display screen of a liquid crystal display device (LCD) or the like. A distal end portion 104 houses a fighting communication interface. Note that a cap 105 is a protection member for protecting the connector 101. The connector 101 is preferably a male connector. If the connector 101 is a male connector, it can be directly connected to the PC. When a female connector is adopted as the connector 101, a connection cable to the PC is required. Hence, in order to obviate the need for a cable, the connector 101 is preferably a male connector. However, the connector 101 may be a female connector.

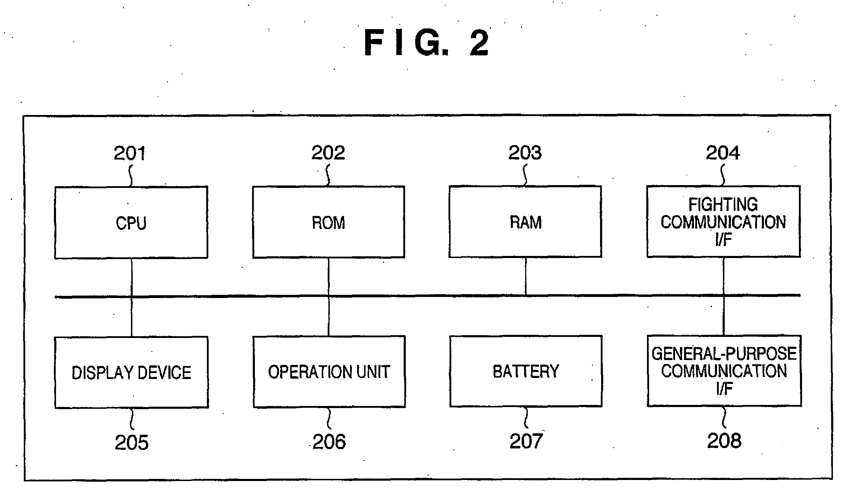

Fig. 2 is a functional block diagram of the portable game apparatus according to the embodiment. A CPU 201 is a control unit which systematically controls respective unit of the game apparatus 100 based on a computer program. For example, the CPU 201 serves as an execution control unit which executes a fighting game using game data with another game apparatus of the same type connected via a fighting communication interface 204.

A ROM 202 is a nonvolatile storage unit which stores control programs such as firmware and the like, a game program, game data for a game, and the like.
The ROM 202 may be implemented by, e.g., an EEPROM or flash memory. A RAM 203 is a volatile storage unit which serves as a work area. The RAM 203 may be configured to hold its storage contents by a battery 207.

For example, the ROM 202 or RAM 203 stores game data received from the PC via a general-purpose communication interface 208. The game data include, for example, character data (example: monsters) that appear in the fighting game, item data (example: weapons), special effect data (example: magical spells), and the like. Assume that not all game data which can be used in the fighting game can be stored in a game data storage unit implemented by the ROM 202 or RAM 203. That is, the total size of all the game data exceeds the storage capacity of the game data storage unit.

The fighting communication interface 204 is a communication unit used to establish connection to another game apparatus of the same type as an opponent of the fighting game. The fighting communication interface 204 may be implemented as a wireless communication unit such as an IrDA (infrared communication interface), Bluetooth interface, wireless LAN interface, or the like. Alternatively, the fighting communication interface 204 may be a wired communication unit. In consideration of connectability and portability, a wireless communication unit is preferred.

A display device 205 is a unit for displaying various kinds of information (at least the execution contents of the fighting game and the like) on the aforementioned display unit 103. An operation unit 206 is an input unit which comprises the operation button 102, and is used to input various instructions (at least instructions associated with the fighting game and the like) from the player. The battery 207 serves as a power supply of the game apparatus 100. The general-purpose communication interface 208 is a general-purpose communication unit which comprises the connector 101, and is used to establish connection to the PC. As the general-purpose communication interface 208, for example, USB, IEEE1394 (i·link), Bluetooth, wireless LAN, and the like may be used.

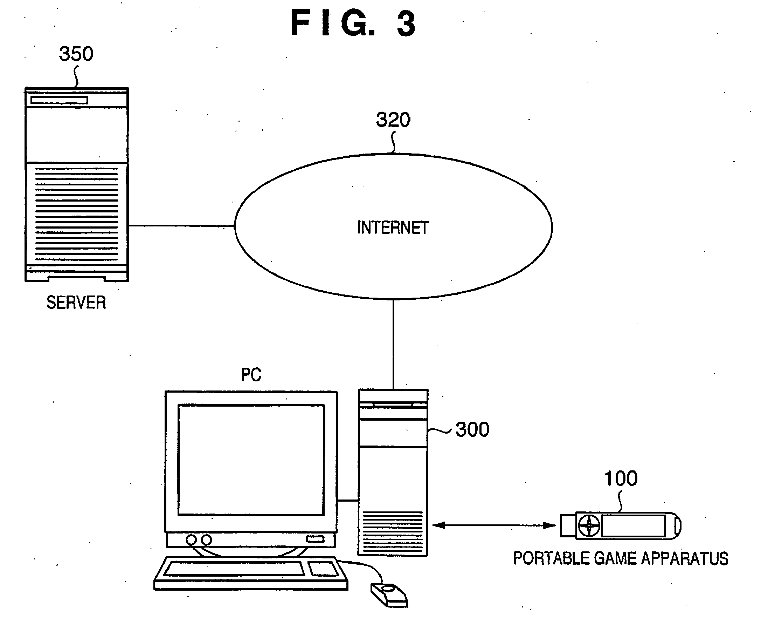

<Overview of Game System>
Fig. 3 shows an overview of a game system according to the embodiment. Note that the game apparatus 100 need not be connected to a PC 300 upon execution of the fighting game. This PC 300 is a general personal computer. Note that a portable phone which comprises a general-purpose interface can be used as the PC 300. In this case, a dedicated computer program is required to be installed in that portable phone.

The PC 300 can establish connection to a server apparatus 350 via the Internet 320. The PC 300 establishes connection to the server apparatus 350 based on information received (or read out) from the game apparatus 100, and downloads information (source files, image data, movie data, scripts, and the like) of a Web page.

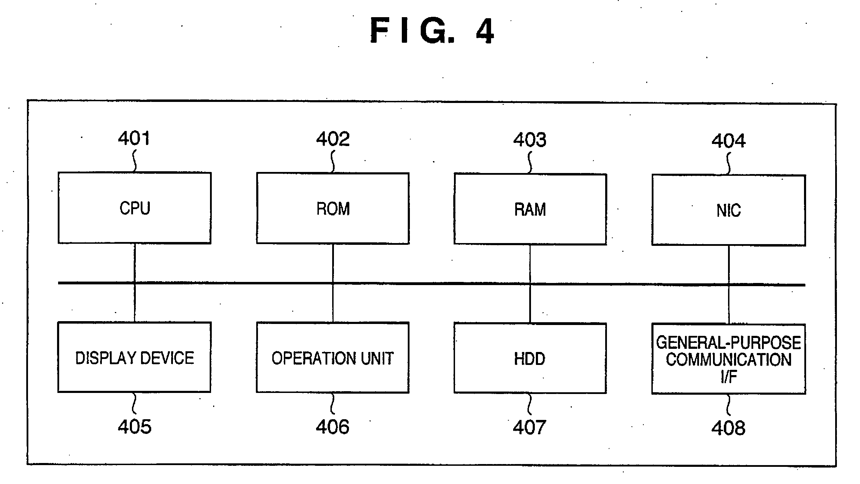

Fig. 4 is an exemplary functional block diagram showing the PC and server apparatus according to the embodiment. Although the PC 300 and server apparatus 350 normally have different hardware arrangements, they have the same arrangement for the sake of simplicity. Of course, the PC 300 and server apparatus 350 have different software configurations, as will be described later.

A CPU 401 is a control unit which systematically controls respective units of the computer based on a computer program. A ROM 402 is a nonvolatile storage unit which stores control programs such as firmware and the like. A RAM 403 is a volatile storage unit which serves as a work area. A hard disk drive (HDD) 407 is a large-capacity storage unit. A display device 405 is a display unit which displays various kinds of information for the user.

An operation unit 406 is an input unit such as a pointing device, keyboard, and the like. A network interface card (NIC) 404 is a communication unit required to connect a network such as the Internet or the like. A general-purpose communication interface 408 is a general-purpose communication unit such as a USB interface or the like. The general-purpose communication interface 208 of the game apparatus 100 is connected to the general-purpose communication interface 408 of the PC 300.

<Overview of Fighting Game>
An example of the fighting game will be described below. This fighting game is executed by connecting a plurality of the aforementioned game apparatuses 100. In this fighting game, a battle (also called a duel) is made in a team competition format. Each team (also called a deck) is organized by one or more game characters (example: monsters, animated characters).

A parameter in the fighting game of a player (operator of the game apparatus 100) who won the battle rises. Note that an experience value is used as an example of the parameter. However, the parameter according to the present invention is not limited to the experience value. For example, other kinds of information such as hit points (HP) and the like may be used. The maximum value of hit points (HP) of a winning player may rise. On the other hand, the maximum value of HP of a defeated player declines. For example, if the HP is expressed by the number of stars, stars move from the game apparatus 100 of the defeated player to that of the winning player. Note that the CPU 201 may control to inhibit the player from executing the fighting game within a predetermined period of time when the number of stars becomes zero. For example, the CPU 201 automatically recovers one star after the predetermined period of time measured by a timer has elapsed.

Each game character has a character level. This character level is referred to upon organizing a team. For example, a rule may be specified to inhibit the total of character levels of game characters that organize one team from exceeding the current experience value of the player. More specifically, the player can organize a team by arbitrary selecting a plurality of game characters stored in the game apparatus 100 within a range in which the total of character levels does not exceed the current experience value of the player.

Since the storage capacity of the game apparatus 100 is limited, the number n (n is an integer) of game characters that can be stored in the game apparatus 100 is also limited. However, there exist game characters larger than n in terms of the settings of the fighting game. Let m (m is an integer larger than n) be the total number of game characters.

When the game apparatus 100 is connected to the PC 300, dedicated management software is launched on the PC 300. This management software may be stored in the game apparatus 100, or may be stored in the PC 300 and may reside.

The player can move data of game characters stored in the game apparatus 100 to the PC 300 using this management software. As a result, the player can increase the free space in the storage capacity of the game apparatus 100. Note that the player can write data of other game characters stored in the PC 300 in the game apparatus 100 using the management software. The player can organize a new team using a newly added game character.

Note that game data such as game characters and the like can be downloaded from a Web page provided by the server apparatus 350 to the PC 300. Of course, the downloaded game data can be written in the game apparatus 100.

Relatively low-resolution game characters can only be displayed on the display unit 103 of the game apparatus 100. Hence, high-resolution images and video pictures about these game characters may be displayed on the Web page provided by the server apparatus 350.

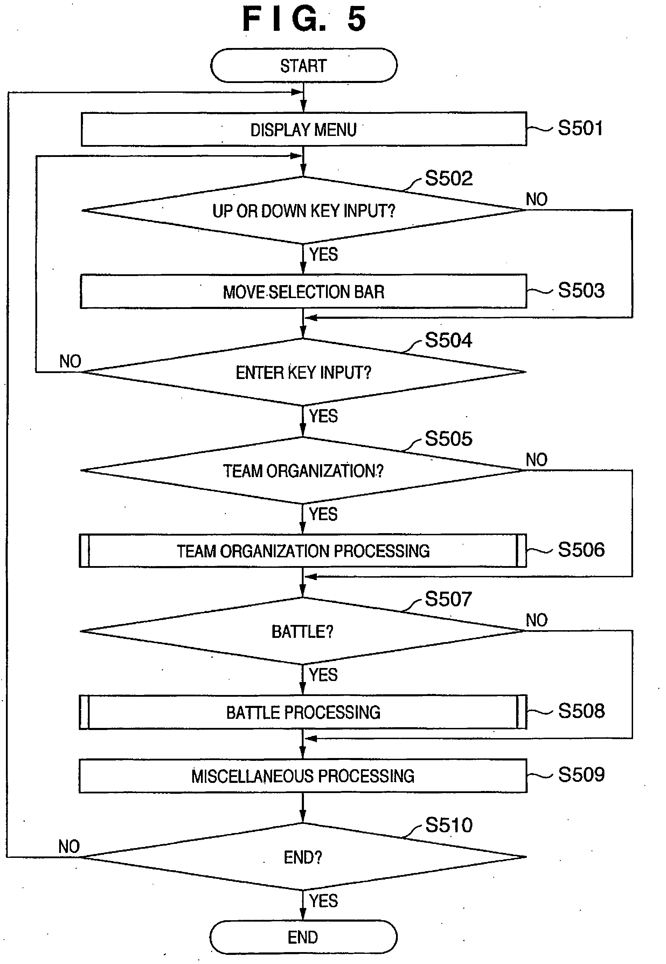

<Basic Processing of Game Apparatus>
Fig. 5 is an exemplary flowchart showing basic processing of the portable game apparatus according to the embodiment. Assume that this basic processing is executed when the power supply of the game apparatus 100 isolated from the PC 300 is turned on. Also, a computer program associated with the basic processing is stored in, e.g., the ROM 202. In step S501, the CPU 201 displays a menu on the display unit 103 of the display device 205.

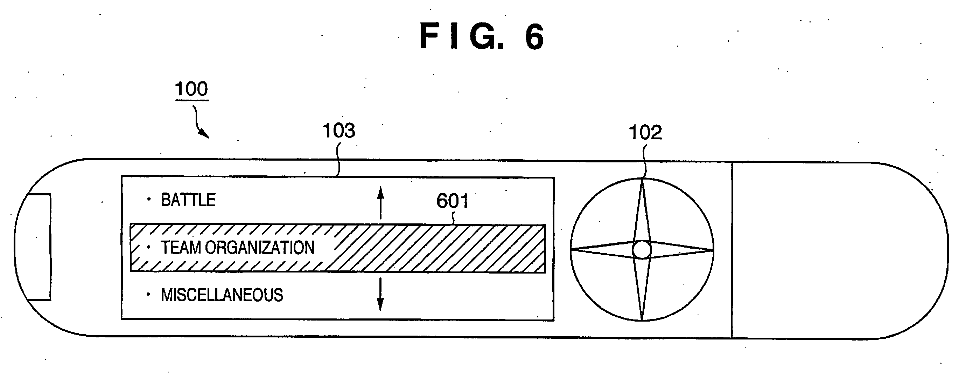

Fig. 6 shows a display example of the menu according to the embodiment. In this example, the player can select one of "battle", "team organization", and "initial setting". A selection bar 601 is a display object used to select one of these processes, and moves vertically within the display unit 103 in response to input of up and down keys of the operation button 102. Note that the selection bar 601 can be easily implemented by highlight display. In the example of Fig. 6, the player selects "team organization". When the player presses the central part (enter key) of the operation button 102 in this state, that selection is settled. A right key of the operation button 102 may serve as an enter key. In this case, a left key of the operation button 102 may serve as a cancel key.

The CPU 201 checks in step S502 if the up or down key (one of the up and down keys) of the operation unit 206 is input. If one of the up and down keys is input, the process advances to step S503, and the CPU 201 controls the display device 205 to display the selection bar 601 to be moved upward or downward according to the key input. If neither the up key nor down key are input, the process jumps to step S504, and the CPU 201 checks if the enter key of the operation unit 206 is input. If the enter key is input, the process advances to step S505; otherwise, the process returns to step S502.

The CPU 201 checks in step S505 if "team organization" is selected from the menu. Note that "team organization" is processing for selecting game characters to be included in the team that appears in the fighting game. If the selected processing is "team organization", the process advances to step S506, and the CPU 201 executes team organization processing. On the other hand, if the selected processing is not "team organization", the process jumps to step S507.

The CPU 201 checks in step S507 if the selected processing is "battle". Note that "battle" means execution of the fighting game. If the selected processing is "battle", the process advances to step S508, and the CPU 201 executes battle processing. On the other hand, if the selected processing is not "battle", the process jumps to step S509.

In step S509, the CPU 201 executes miscellaneous processing. The miscellaneous processing includes, for example, initial setting processing. For example, in the initial setting processing, the CPU 201 executes adjustment of the current time and the like. Also, the CPU 201 may execute processing for moving (transferring) game characters and the like to another game apparatus 100 or exchanging game characters and the like with another game apparatus 100, as will be described later.

After that, the CPU 201 checks in step S510 if an end instruction is input from the operation unit 206. If an end instruction is input, the CPU 201 ends the basic processing, and turns off the power supply or enters a power saving mode. On the other hand, if no end instruction is input, the process returns to step S501.

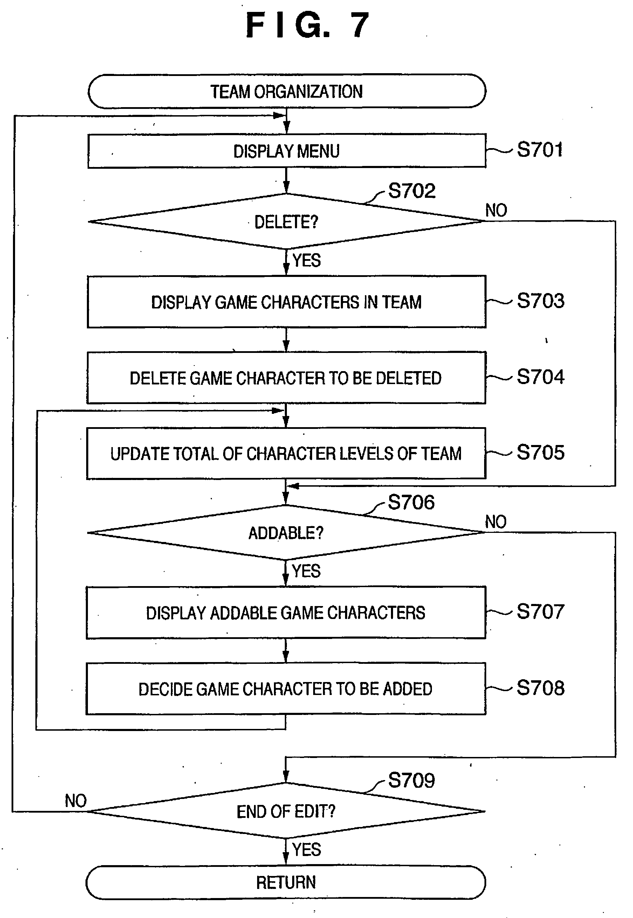

<Team Organization Processing>
Fig. 7 is an exemplary flowchart showing team organization processing according to the embodiment. This team organization processing corresponds to a subroutine of step S506. In step S701, the CPU 201 displays a menu that allows the player to select various processes associated with team organization.

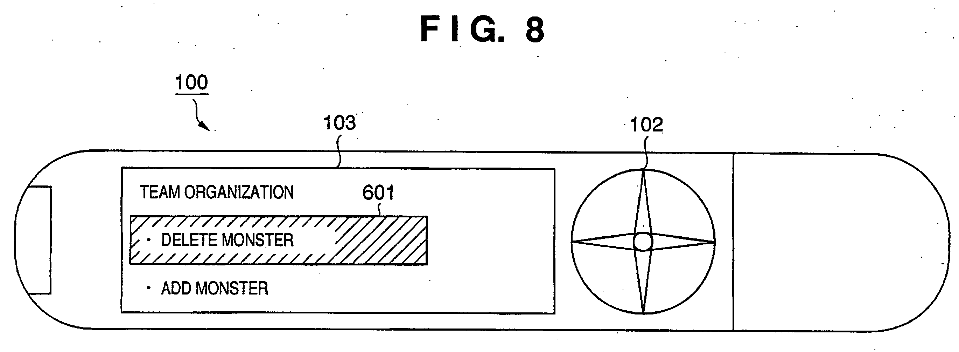

Fig. 8 shows an example of the menu of the team organization processing according to the embodiment. In this example, the player can select processing for deleting a game character (example: monster) from a team, and processing for adding a game character to a team using the aforementioned selection bar 601.

The CPU 201 checks in step S702 if the deletion processing is selected. If the deletion processing is selected, the process advances to step S703. On the other hand, if the addition processing is selected, the process jumps to step S706.

In step S703, the CPU 201 reads out data of game characters included in the current team from the ROM 202, and displays them on the display unit 103 of the display device 205.

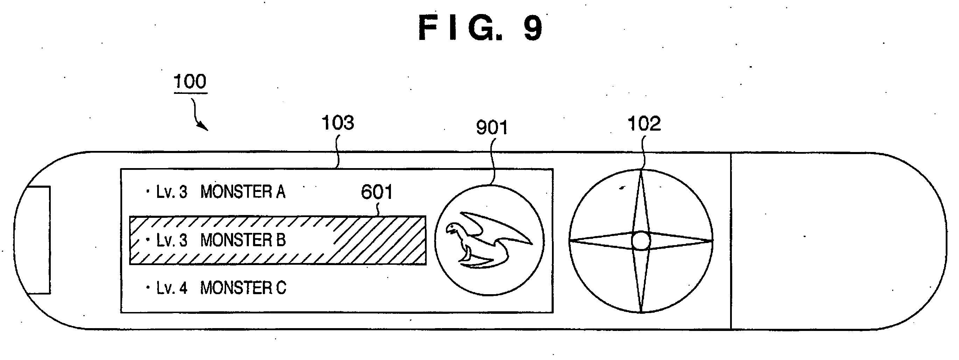

Fig. 9 shows an example of a monster selection screen according to the embodiment. In this example, three monsters A, B, and C included in the team, their character levels (example: Lv.3, etc.), and an image 901 of the currently selected monster are displayed. Of course, if the player selects another monster using the selection bar 601, the CPU 201 reads out image data of the selected monster from the ROM 202 and displays it.

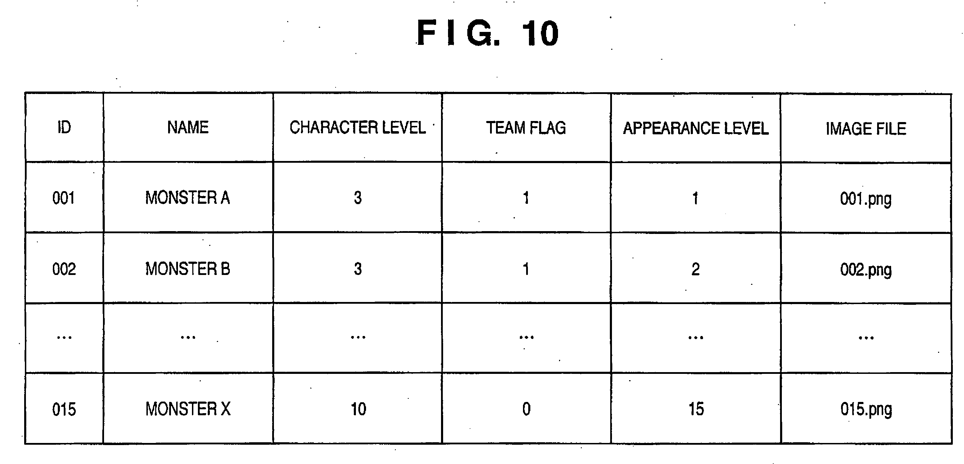

Fig. 10 shows an example of game characters according to the embodiment. This list includes various kinds of information about game characters (example: monsters) stored in the ROM 202. "ID" is identification information used to identify each monster. "Name" is a nickname of each monster, and is displayed on the display unit 103 upon selection of a monster. "Character level" is information indicating offensive power, defensive power, and the like of each monster.

"Team flag" is a flag indicating whether or not a monster of interest is currently engaged on the team. The CPU 201 can recognize with reference to the team flag which of game characters is a member of the team. In the example of Fig. 10, "1" means entry, and "0" means non-entry. "Appearance level" means the experience value of the player required to select that monster. That is, when the experience value of the player does not reach a predetermined value, a certain monster cannot be selected (displayed). "Image file" means the name of a file that stores data required to display an image of a game character.

If a selection decision instruction is input from the operation unit 206, the CPU 201 decides a monster currently selected by the selection bar 601 as an object to be deleted in step S704. Also, the CPU 201 changes the team flag of the selected monster to "0".

In step S705, the CPU 201 sums up the character levels of game characters (monsters) which are engaged on the team and updates a total value (sum total). The total value is held in, e.g., the RAM 203 or the like.

The CPU 201 checks in step S706 if game characters which can be added are available. For example, the CPU 201 calculates a difference by subtracting the total value from the parameter of the player. Note that the CPU 201 determines the parameter of the player using at least one of the experience value of the player, the number of fights, and the fight record. For example, the CPU 201 may determine the parameter proportional to the experience value or the number of fights, or may determine the parameter to be a relatively large value if the fight record is relatively good. The CPU 201 then searches the list to extract game characters which have character levels smaller than the difference and do not enter the team.

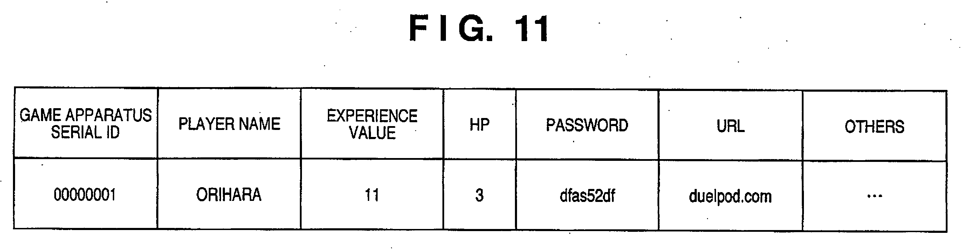

Fig. 11 shows an example of a player profile according to the embodiment. Assume that this profile is stored in the ROM 202. In Fig. 11, "game apparatus serial ID" is unique identification information which is set at the time of manufacture of the game apparatus 100 or upon accessing the server apparatus 350. "Player name" is a nickname of the player, and is set, e.g., upon connection to the PC 300. For example, the CPU 401 of the PC 300 executes initial setting processing when the game apparatus 100 is connected for the first time. The CPU 401 writes a nickname input from the operation unit 406 in the game apparatus 100 as a player name.

"Experience value" is that of the player, which rises at least along with the progress of the fighting game. Note that the parameter determined based on the experience value or the like is used by the CPU 201 as an upper limit of the total value of the character levels upon organizing a team.

"HP (hit points)" is information used upon execution of a battle in the fighting game. The HP decreases if the player has encountered an effective attack from the opponent. If the HP becomes zero, the player has lost a battle. Note that the maximum value of the HP is incremented by one when the player wins the battle. On the other hand, the maximum value of the HP is decremented by one if the player has lost a battle. Note that the HP may recover over time.

If game characters are successfully extracted, these game characters can be added to the team. Hence, the process advances to step S707. On the other hand, if no game character that can be added is extracted, the process jumps to step S709, and the CPU 201 checks based on an input from the operation unit 206 if the organization processing is to end. If the processing is not to end, the process returns to step S701.

In step S707, the CPU 201 displays game characters, which are extracted from the character list and can be added, on the display unit 103 of the display device 205. The display example shown in Fig. 9 is also that of a screen which allows the player to select a monster to be added. In this example, three monsters are selectable. If three or more monsters are selectable, the CPU 201 displays other monsters by scrolling the screen.

In step S708, the CPU 201 decides a game character to be added in response to selection and decision instructions input via the operation button 102 of the operation unit 206. After that, the process returns to step S705, and the CPU 201 updates the total value of the character levels of the team.

In this manner, according to this embodiment, the CPU 201 calculates the total value of the character levels which are given in advance to game characters to be included in the team to be organized. Furthermore, the CPU 201 permits selection of game characters within the range in which the calculated total value becomes equal to or lower than the parameter of the player.

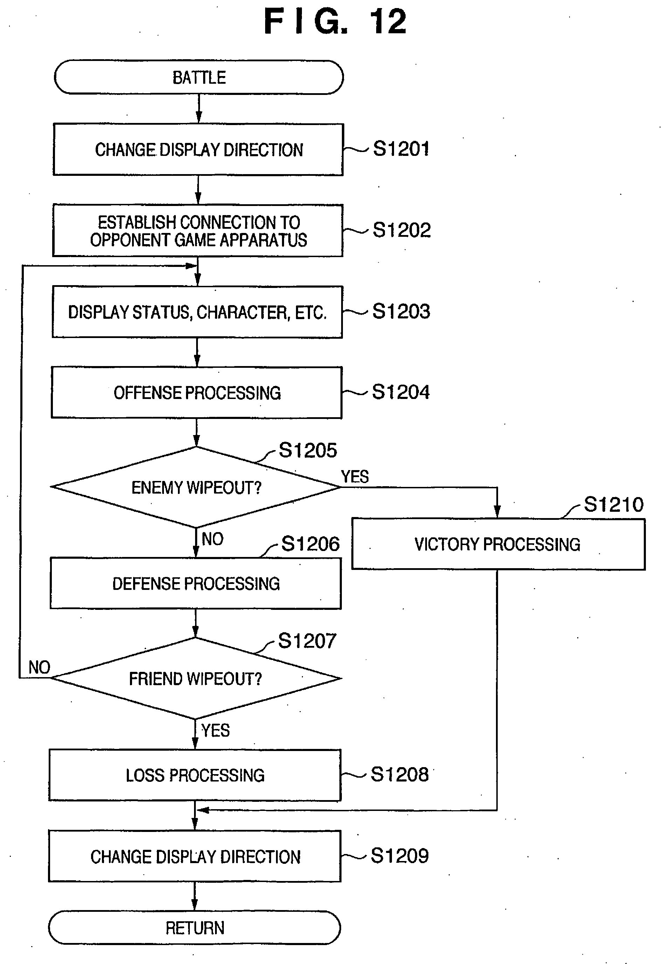

<Battle Processing>
Fig. 12 is an exemplary flowchart showing battle processing according to the embodiment. This processing corresponds to a subroutine of step S508 described above.

In step S1201, the CPU 201 changes the display direction of the display unit 103. For example, upon inputting instructions (e.g., organization of a team and the like) for the fighting game, the CPU 201 sets the display direction of the display unit 103 to agree with a first direction. Upon fighting with another game apparatus 100, the CPU 201 sets the display direction of the display unit 103 to agree with a second direction different from the first direction.
In this case, the CPU 201 may change the display direction in response to a battle execution instruction input from the operation unit 206.

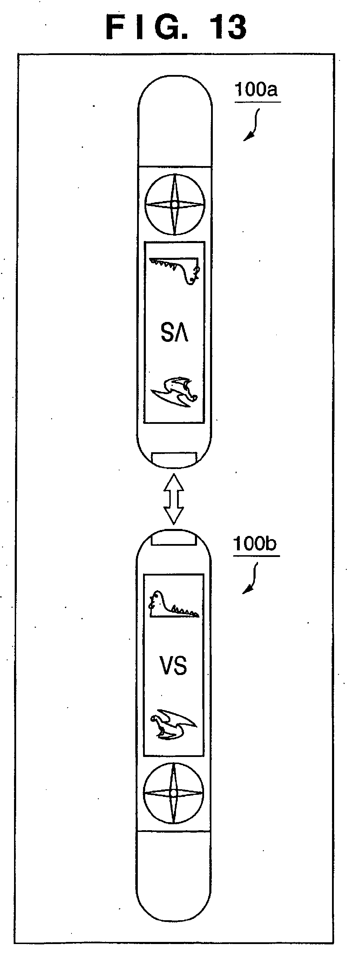

Fig. 13 shows a connection example of the game apparatuses, and a display example on their screens upon execution of the fighting game according to the embodiment. In Fig. 13, to a game apparatus 100a to be operated by the player, a game apparatus 100b of the opponent is connected via the fighting interface 204. The display direction upon fighting is different through about 90° from that of the display unit 103 upon team organization shown in Fig. 9. By changing the display direction in a normal state from that upon fighting, the player can enjoy a dynamic battle more in the fighting game. In the example of Fig. 13, a friend monster is displayed on the near side, and an enemy monster (of the opponent) is displayed at the far side. The display positions of friend and enemy monsters may be reversed. However, upon fighting, since the game apparatus 100b is located to face off against the game apparatus 100a, as shown in Fig. 13, the player can intuitively recognize the friend monster which is displayed at the near side.

Also, as can be seen from Fig. 13, in the display direction upon fighting, the fighting communication interface of the game apparatus 100b faces that of another game apparatus 100a. Especially, a communication unit such as an IrDA unit having a strong directivity, that using a weak radio wave, or the like may be used as the fighting communication interface 204. In this case, the fighting communication interface of the game apparatus 100a need to face or come close to that of the game apparatus 100b so as to communicate with each other. In general, in the fighting game, when the player faces an opponent player, they overdose on the game. The game apparatus 100 is desirably implemented as a USB memory type compact, lightweight apparatus. Hence, upon fighting, the player may use the game apparatus 100 as if he or she were presenting a playing card or were throwing out a sword to an opponent. In this case, the player may enjoy the fighting to the fullest. If the game apparatus 100 itself or its display unit 103 has a rectangular shape (example: a rectangular-like shape having an aspect ratio of 1 : 2 or more), the player can enjoy the fighting game to the fullest by switching the display direction.

Furthermore, the display direction upon team organization shown in Fig. 9 is parallel to the horizontally long direction of the display unit 103.
On the other hand, the display direction upon fighting agrees with the vertically long direction of the display unit 103, as shown in Fig. 13. Especially, upon team organization, a relatively large number of characters are displayed. Hence, in order to reduce breaks, it is desirable to set the horizontally long direction of the display unit 103 to agree with the display direction. On the other hand, upon execution of a battle, since the number of characters to be displayed is relatively small, the display direction can agree with the vertically long direction of the display unit 103.

In step S1202, the CPU 201 establishes connection to the opponent game apparatus 100 via the fighting communication interface 204. In step S1203, the CPU 201 reads out game data from the ROM 202 or RAM 203, and displays them on the display unit 103 of the display device 205. The CPU 201 similarly displays game data of the opponent received via the fighting communication interface 204. The game data to be displayed include, for example, game characters, statuses (example: experience value, HP, etc.). Likewise, the names of game characters may be displayed.

In step S1204, the CPU 201 executes offense processing. For example, the CPU 201 calculates a damage on the opponent according to the character levels given to the game characters. Note that the CPU 201 subtracts the calculated damage value from the HP (hit points) of the opponent. If processing for determining an offense or defense turn is included, whether the offense or defense processing is executed first is determined based on the result of that processing.

The CPU 201 checks in step S1205 if all the game characters which form the opponent (enemy) team are wiped out. For example, if the HP of all the game characters of the opponent becomes zero, all these game characters are wiped out. Note that each game character may have an HP value. In this case, if the HP of a first game character becomes zero, a second game character becomes a central player of the battle. If the enemy characters are wiped out, the process advances to step S1210, and the CPU 201 executes victory processing. For example, the CPU 201 rises the experience value by a predetermined amount. Also, the CPU 201 may execute the rise processing of the HP maximum value (by moving stars from the opponent). After that, the process advances to step S1209. On the other hand, if the enemy characters are not wiped out, the process advances to step S1206.

The CPU 201 may change the rate of rise of the experience value according to a time acquired from the timer. For example, when the rate of rise is relatively increased in a certain time zone compared to another time zone, the player can explore, for pleasure, a time at which the rate of rise is high.

For example, the CPU 201 may lower the rate of rise at a time which belongs to school hours or cram school hours of the player, compares to other times (example: a time zone after the player comes home from school until he or she goes to cram school). In this way, the player can attend to lessons in school and cram school. Especially, when the fighting game is executed during such time zone, the rate of rise may be decreased as a penalty. In such case, since execution of the fighting game during such time zone is disadvantageous for the player, the player can attend to lessens and the like by himself or herself. Note that such time zone may be set in the initial settings or may be set using the management software which runs on the PC. Since the time zone to be penalized and that to gain an advantage are influenced by personal reasons of the player, the CPU 201 may set them in the initial settings. Alternatively, the CPU 401 of the PC 300 may set these time zones based on information input from the operation unit 406. During a time zone after the player comes home from school until he or she goes to cram school, the CPU 201 may rise the rate of rise compared to other times. In this case, the player can enjoy the game between an interval of school and cram school. Likewise, the rate of rise of the aforementioned parameter may be changed as in the experience value. When the parameter depends on the experience value, the rate of rise of the parameter automatically changes in synchronism with that of the experience value.

In step S1206, the CPU 201 executes defense processing. This defense processing corresponds to the offense processing of the opponent. Hence, the CPU 201 executes the aforementioned calculation of the damage value and the like. The CPU 201 checks in step S1207 if the friend game characters are wiped out. This checking processing is the same as that in step S1205. If the friend characters are not wiped out, the process returns to step S1203, and the CPU 201 executes a next battle. If the friend characters are wiped out, the process advances to step S1208.

In step S1208, the CPU 201 executes loss processing. For example, the CPU 201 starts an internal timer to set to inhibit execution of a next battle during a predetermined period of time. For example, during this battle inhibition period, the CPU 201 may clear "battle" from the menu shown in Fig. 6. Alternatively, the CPU 201 may execute decline processing of the HP maximum value (by moving star to the opponent). Upon moving (depriving or being deprived of) the stars as many as the HP, the player may enhance the persistence to win. After that, the process advances to step S1209, and the CPU 201 restores the display direction of the display unit 201.

<Exchange or Transfer of Game Data Between Game Apparatuses>
As an example of the aforementioned miscellaneous processing (S509), exchange or transfer (move) processing of game data between the game apparatuses will be described. In a fighting game and the like, many game characters, items (example: weapons, vehicles, etc.), and special effects (example: magical spells, etc.) may appear. These game data are important since they decide a battle. In general, in the fighting game, when the experience value rises, the player can normally acquire these game data. However, rare game data which cannot be acquired unless special conditions are met may be set. In such case, the player who can acquire such game data may feel superior. Hence, game data itself has a transfer value.

On the other hand, the player may often transfer game data although such transfer is not unique to rare game data. Especially, the game apparatus 100 according to this embodiment can store not all game data set in the game in the ROM 202. Hence, in order to store other game data, the player need to delete the currently stored game data, to move them to the PC 300, or to move them to another game apparatus 100.

The player may often exchange game data with another person. Game data which are valueless for such person may be valuable for the player. For example, assume that the game apparatus 100a has a "fire" attribute, and monsters with the "fire" attribute can emphasize the offensive power. Nevertheless, if only monsters with a "water" attribute are available, the offensive power of the game apparatus 100 decreases dramatically. On the other hand, in the game apparatus 100b with the "water" attribute, the offensive power of monsters with the "water" attribute is emphasized. When the fighting game is set in this way, a demand has arisen for exchanging game data.

Hence, in this embodiment, processing for moving game data to another game apparatus 100 or exchanging game data with another game apparatus will be described.

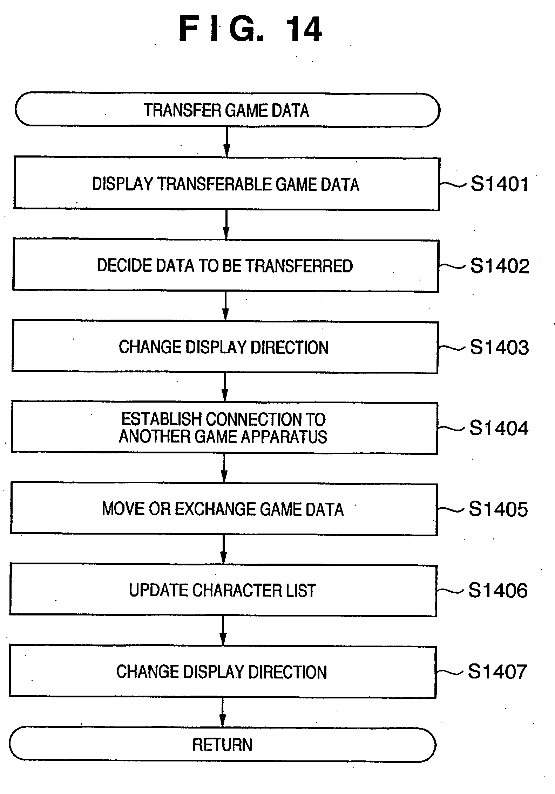

Fig. 14 is an exemplary flowchart showing transfer or exchange processing of game data according to the embodiment. This flowchart expresses the aforementioned miscellaneous processing (S509) as a subroutine.

In step S1401, the CPU 201 reads out transferable game data from the ROM 202 and the like, and displays them on the display unit 103 of the display device 205. An example of the display screen at that time is also as shown in Fig. 9.

The transferable game data include, for example, game data having appearance levels lower than the current experience value of the player, and the like. That is, hidden (secret) game data which cannot be used by the player yet cannot be transferred. This is because permission of transfer of such game data to another game apparatus 100 cuts the pleasure for improving the experience value in half. The CPU 201 reads out the experience value stored in the ROM 202, RAM 203, or the like, and also the character list stored in the ROM 202 or the like, and compares the experience value with the appearance levels. As a result, the CPU 201 can extract transferable game data.

In step S1402, the CPU 201 decides game data as a transfer target in response to selection and decision instructions from the operation unit 206. In step S1403, the CPU 201 changes the display direction of the display unit 103. The display direction at this time is the same as that upon fighting. This is because the fighting communication interface of the game apparatus desirably faces that of the game apparatus of an assignee so as to move game data.

In step S1404, the CPU 201 establishes connection to the game apparatus of the assignee via the fighting communication interface 204. In step S1405, the CPU 201 transmits the game data to be transferred to the game apparatus of the assignee. The CPU 201 deletes the transmitted game data from the ROM 202 and the like. In this manner, the move processing of game data is complete. In case of the exchange processing of game data, the CPU 201 receives game data from a partner game apparatus via the fighting communication interface 204, and writes the received game data in the ROM 202 or the like.

In step S1406, the CPU 201 updates the character list. For example, the CPU 201 deletes information associated with the transmitted game data from the character list. The CPU 201 adds information associated with game data received from the partner game apparatus to the character list. After that, in step S1407 the CPU 201 restores the display direction of the display unit 103.

<Management by PC>
Processing for moving or exchanging game data stored in the game apparatus 100 by the PC 300 will be described below. As described above, the fighting game according to this embodiment has game data which exceed the storage capacity of the storage unit of the game apparatus 100. As one game data, data of a game character (example: monster) is available. Since the storage capacity of the storage unit is limited, the game apparatus 100 can only store a predetermined number of (example: 20) game characters.

However, for example, 100 game characters may be set in terms of the fighting game. In this example, the remaining 80 game characters are stored in the PC 300 or server apparatus 350.

Hence, in order to use game characters which are currently not stored in the game apparatus 100, they need to be written in the game apparatus 100 using arbitrary unit. In this embodiment, processing for moving game data such as game characters and the like from the storage unit of the game apparatus 100 to that of the PC 300, and writing game data stored in the storage unit of the PC 300 in a free area formed as a result of movement will be described.

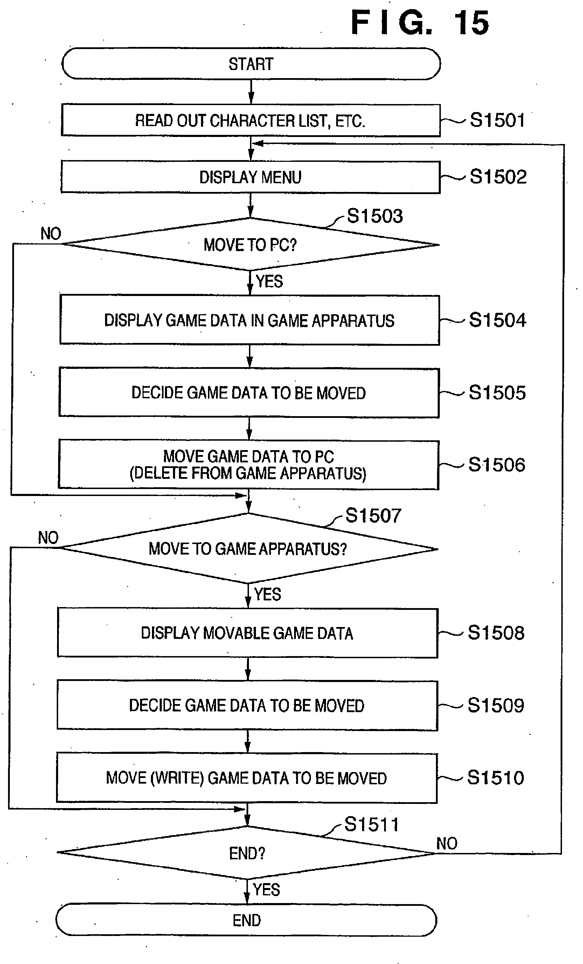

Fig. 15 is an exemplary flowchart showing game data move processing according to the embodiment. Assume that a computer program associated with this flowchart is stored in the HDD 407, and is loaded onto the RAM 403 as needed.

Assume that the game apparatus 100 is connected to the PC 300 via the general-purpose communication interface 208. When the game apparatus 100 is implemented as a so-called USB memory, game data in a flash memory (ROM 202) can be directly operated from the PC 300. However, the game programs and the like are desirably inhibited from being directly operated from the PC 300 except for updating.

In step S1501, the CPU 401 of the PC 300 reads out the character list, player profile, and the like from the ROM 202 of the game apparatus 100 via the general-purpose communication interface 408. The CPU 401 detects using the general-purpose communication interface 408 whether or not the game apparatus 100 is connected to the PC 300. When the CPU 401 cannot confirm connection of the game apparatus 100, it may display a warning message to prompt the player to connect the game apparatus 100.

In step S1502, the CPU 401 displays a menu on the display device 405. Assume that various processes are selectable from this menu. Various processes include, for example, move of game data from the game apparatus to the PC (to be referred to as "move processing to the PC" hereinafter), move of game data from the PC to the game apparatus (to be referred to as "move processing to the game apparatus" hereinafter), access to a Web site provided by the server apparatus, and the like. Move of game data will be described below.

The CPU 401 checks in step S1503 if move processing to the PC is selected via the operation unit 406. If the move processing to the PC is selected, the process advances to step S1504; if another processing (move processing to the game apparatus) is selected, the process jumps to step S1507.

In step S1504, the CPU 401 reads out game data (example: the names, character levels, and image files of monsters, and the like) registered in the readout character list from the ROM 202 of the game apparatus 100, and displays them on the display device 405. When identical game data are stored in the HDD 407 of the PC 300, the CPU 401 may read out these game data from the HDD 407. The display device 405 displays the game data stored in the game apparatus so as to be selectable from the operation unit 406. For example, when check boxes are displayed together with the game data, game data to be moved can be selected by checking the corresponding check box using a mouse or the like.

In step S1505, the CPU 401 decides game data to be moved in response to a selection instruction from the operation unit 406. In step S1506, the CPU 401 reads out the game data to be moved from the game apparatus 100, and stores them in the HDD 407. The CPU 401 deletes the corresponding game data in the ROM 202. When game data to be moved is fixed data, the CPU 401 need only to delete that game data in the RAM 202, and need not to write it in the HDD 407 of the PC 300.
This is because, the HDD 407 of the PC 300 has already stored that game data.

The CPU 401 checks in step S1507 if move processing to the game apparatus is selected via the operation unit 406. If the move processing to the game apparatus is selected, the process advances to step S1508. On the other hand, if another processing (access to a Web site or the like) is selected, the process advances to step S1511 after that processing is executed.

In step S1508, the CPU 401 reads out brochure data stored in the HDD 407, and displays game data (example: the names, character levels, and image files of monsters, and the like) registered in the brochure data on the display device 405. The brochure data may register information of all or nearly all game data that appear the fighting game. Of game data which appear in the fighting game, those which are not stored in the HDD 407 may not be registered in the brochure data. Alternatively, game data which need to be downloaded from the server apparatus 350 need not to be registered in the brochure data. By contrast, these game data may also be registered in the brochure data. The format of the brochure data can be practically the same as that of the aforementioned character data.

The display device 405 displays the game data movable to the game apparatus 100 so as to be selectable from the operation unit 406. For example, when check boxes are displayed together with the game data, game data to be moved can be selected by checking the corresponding check box using the mouse or the like.

In step S1509, the CPU 401 decides game data to be moved in response to a selection instruction from the operation unit 406. In step S1510, the CPU 401 reads out the game data to be moved from the HDD 407 (or downloads the game data from the server apparatus 350 as needed), and stores the readout data in the ROM 202 of the game apparatus 100. The CPU 401 may or may not delete the game data from the HDD 407. This is because the HDD 407 of the PC 300 generally has the storage capacity greatly larger than that of the game apparatus 100.

If the CPU 401 receives a processing end instruction (e.g., an end instruction of the computer program or the like) from the operation unit 401 in step S1511, it ends the processing according to this flowchart; otherwise, the process returns to step S1502.

When the game data stored in the game apparatus 100 have been changed in steps S1506 and S1510, the CPU 401 reflects such change in the character list, and stores the character list in the ROM 202.

According to this embodiment, game data can be moved or exchanged between the PC 300 and game apparatus 100. For example, game data which cannot be stored in the storage unit of the game apparatus of those which appear in the fighting game are stored in the storage device (example: the HDD 407 and the like) of the personal computer. Some game data stored in the storage unit of the game apparatus may be moved to the storage device of the personal computer. In this manner, some other game data stored in the storage device of the personal computer can be written in the free space of the storage area of the game apparatus.

<Connection to Server>
As has been described above with reference to Fig. 3, the server apparatus 350 according to this embodiment provides information associated with the fighting game to the PC 300 to which the game apparatus 100 is connected or not connected. For example, when information to be provided is changed depending on whether or not the game apparatus 100 is connected, or when information to be provided is changed according to the progress of the game, the player may be involved in the game apparatus 100 and its fighting game.

For example, high-resolution images and video pictures of monsters are provided on a Web page to a user who possesses the game apparatus 100, and a general introduction page of the game apparatus 100 is provided to a user who does not possess it. There are various methods of checking whether or not the user possesses the game apparatus 100. If connection of the game apparatus 100 to the PC 300 is used as a condition, the player can easily access the Web page.

On a message board of a general Web site, threads about various games are generated. Normally, one thread is generated per certain game title to prevent indiscriminate generation of threads. In this case, since ones who have high to low experience values use one thread, many problems are posed.

For example, one who has a high experience value may post a message that may look down on one who has a low experience value in a message board. If the qualifying age of the game apparatus is low, the ethics of players may not be fermented enough, and posting of such messages can hardly be suppressed. On the other hand, players with experience values of identical levels may not be looked down upon on the ground of experience values. If one who has a high experience value posts walk-through information without careful consideration, one who has a low experience value may get uninterested in the game.

Hence, it is desirable to provide Web pages according to experience values. It is also desirable to provide different Web pages depending on connection/non-connection of the game apparatus 100.

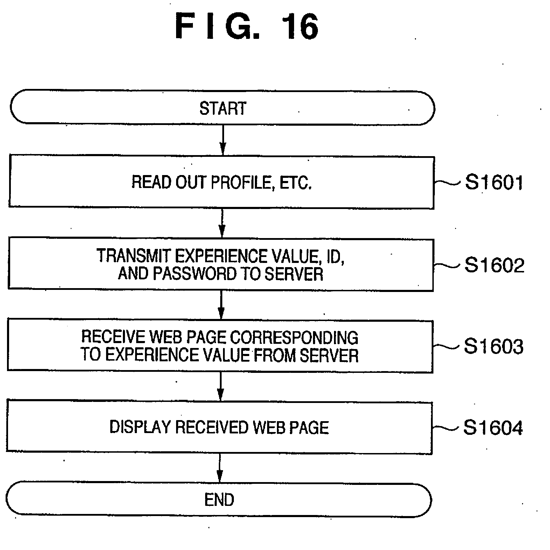

Fig. 16 is an exemplary flowchart showing access processing to a Web page according to the embodiment. Note that this access processing is executed by the PC 300. A computer program required to implement this processing may be stored in either the ROM 202 of the game apparatus 100 or in the HDD 407 of the PC 300.

In step S1601, the CPU 401 of the PC 300 reads out the user profile from the ROM 202 as the game data storage unit of the game apparatus 100. The user profile includes, for example, the ID, password, experience value, and the like of the player (Fig. 11). Note that the CPU 401 detects via the general-purpose communication interface 408 whether or not the game apparatus 100 is connected to the PC 300. If the CPU 401 cannot confirm connection of the game apparatus 100, it may display a warning message to prompt the player to connect the game apparatus 100.

In step S1602, the CPU 401 transmits the experience value, ID, and password to the server apparatus 350 via the NIC 404. The server apparatus 350 executes authentication processing based on the ID and password. If the authentication has succeeded, the server apparatus 350 generates source files and the like of a Web page according to the experience value, and transmits them to the PC 300. Note that the CPU 401 may transmit connected information indicating that the game apparatus 100 is connected to the PC 300 to the server apparatus 350 in advance. Of course, the CPU 401 may transmit arbitrary information included in the user profile read out from the game apparatus 100 to the server apparatus 350 as connected information.

In step S1603, the CPU 401 receives the Web page (example: source files, image files, scripts, and the like) according to the experience value from the server apparatus 350 via the NIC 404. In step S1604, the CPU 401 displays the received Web page on the display device 405.

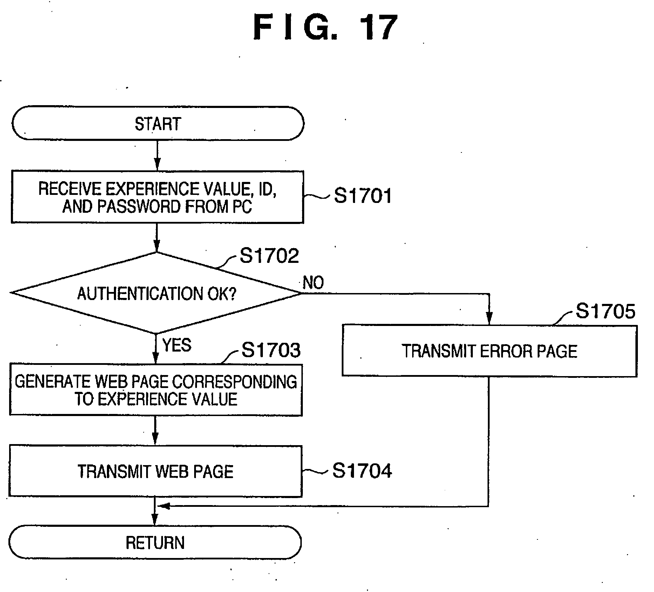

Fig. 17 is an exemplary flowchart showing information providing processing by the server apparatus according to the embodiment.

In step S1701, the CPU 401 of the server apparatus 350 receives the experience value, ID, password, and the like from the PC 300 via the NIC 404. In step S1702, the CPU 401 executes authentication processing of the received ID and password based on an authentication database stored in the HDD 407. If the authentication has succeeded, the process advances to step S1703. On the other hand, if the authentication has failed, the process advances to step S1705, and the CPU 401 transmits a Web page indicating an error to the PC 300.

In step S1703, the CPU 401 generates a Web page according to the received experience value. As for the Web page, assume that a template file is stored in advance in the HDD 407. The CPU 401 may use, for example, a CGI program used to generate a download ranking of game data and the like. In step S1704, the CPU 401 transmits the generated Web page to the PC 300.

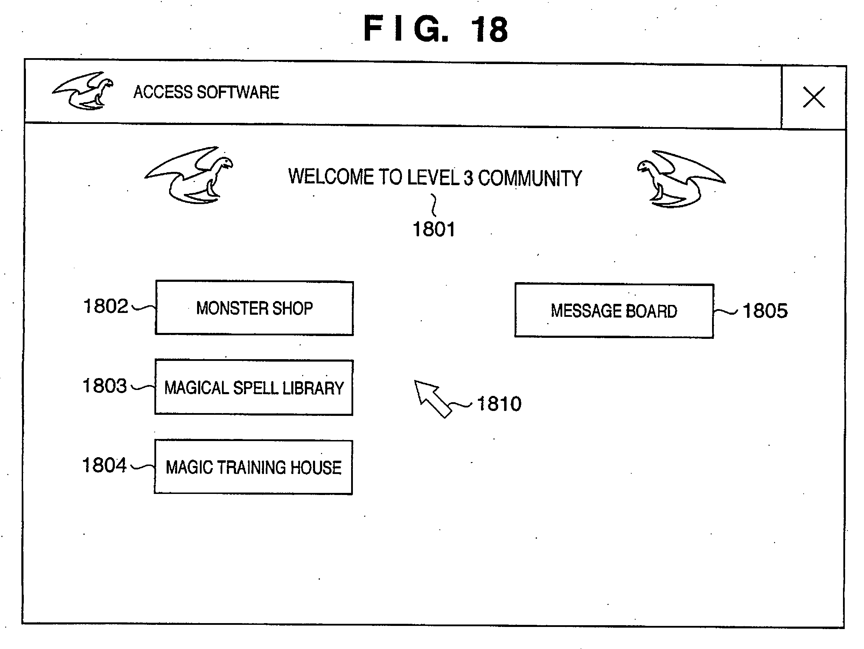

Fig. 18 shows an example of the Web page corresponding to the experience value according to the embodiment. Information "level 3" of the received experience value is reflected in a title 1801 of the page. From this page, links to other related pages are provided. For example, a link 1802 is that to "monster shop" for downloading a brochure of monsters, and monsters as an example of game data. A link 1803 is that to "magical spell library" for browsing explications about magical spells (magic) as special effects of game data. A link 1804 is that to "magic training house" for training magical spells. A link 1805 is that to a message broad where only players with identical (or approximate) experience values can post and browse messages. Since only players with identical or similar experience values can access this message board, the chances of bullying against ones with low experience values by ones with high experience values can be reduced, and those of leakage of walk-through information which can be obtained by only ones with high experience values to those with low experience values without careful consideration can also be reduced. Note that a pointer 1810 moves in synchronism with the operation of the operation unit 406 of the PC 300. Also, all link destinations are configured by Web pages. Furthermore, the degree of approximation of the experience values falls within a range of about ±1 to 2.

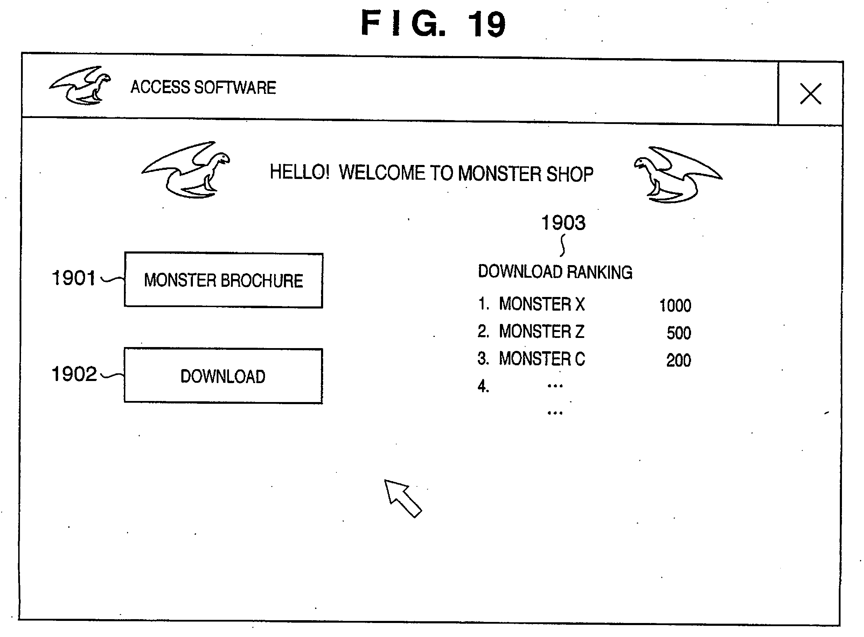

Fig. 19 shows another example of the Web page according to the embodiment. Especially, this Web page is that for the monster house. This Web page includes a link 1901 to the brochure about monsters that appear in the fighting game. By clicking a link 1902 to a download page, the player can access the page that allows to download game data such as monsters and the like. Note that this Web page also includes a download ranking 1903 indicating the numbers of downloaded monsters. Note that the player may click displayed game data such as a monster or the like on the monster brochure to download that game data.

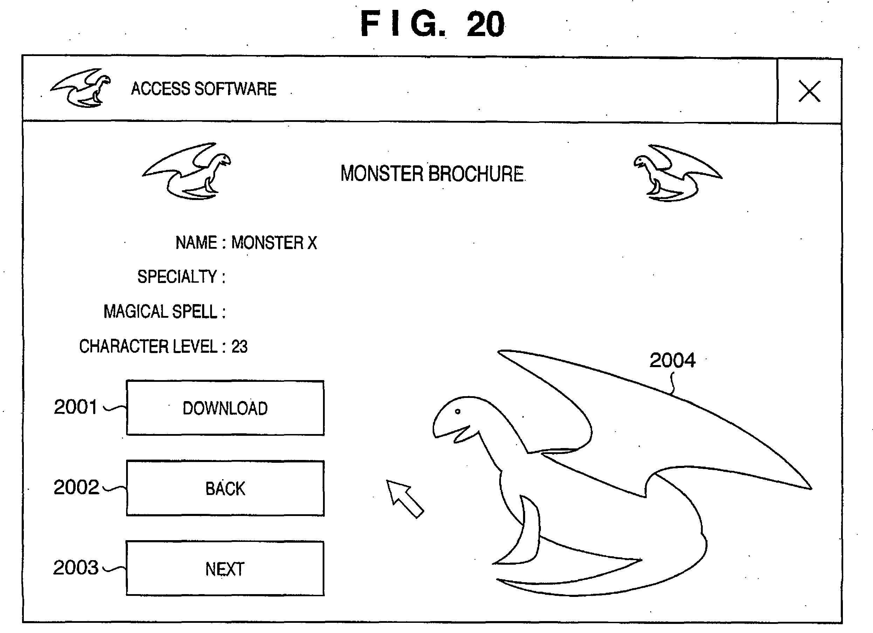

Fig. 20 shows still another example of the Web page according to the embodiment. This page is displayed upon clicking the link 1901 to the monster brochure. This page displays the name, specialty, magic spells, and character level of a certain monster. Note that the CPU 401 reads out these pieces of information from a game database stored in the HDD 407 of the server apparatus 350, and inserts them in the Web page.

Upon clicking a download button 2001, the CPU 401 of the server apparatus 350 transfers the displayed game data to the PC 300. Upon clicking a back button 2002, the page returns to the previous page. Upon clicking a next button 2003, the CPU 401 of the server apparatus 350 reads out information of the next game data from the game database, generates a next Web page, and transmits it to the PC 300. Note that the Web page also includes a high-resolution image or video picture (impressive visual data) 2004. With this page, the player can be satisfied with higher-resolution images and the like than images of game data displayed on the display unit 103 of the game apparatus 100.

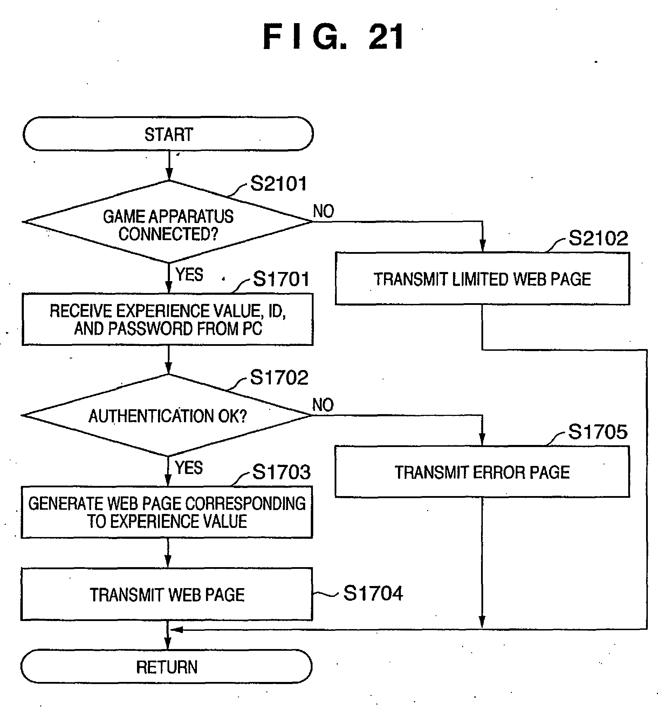

Fig. 21 is another exemplary flowchart showing the Web page providing processing according to the embodiment. In this case, the server apparatus 350 provides different Web pages depending on connection/non-connection of the game apparatus. Note that the same step numbers denote the already explained steps for the sake of simplicity.

The CPU 401 of the server apparatus 350 checks in step S2101 if the game apparatus 100 is connected to the PC 300. For example, the PC 300 may detect connection/non-connection of the game apparatus 100, and may notify the server apparatus 350 of this detection result. Since the CPU 401 of the PC 300 can easily detect the connection/non-connection of the game apparatus 100 via the general-purpose communication interface 408, the PC 300 desirably notify the server apparatus 350 of the detection result. If the game apparatus 100 is connected, the process advances to step S1701.

On the other hand, if the game apparatus is not connected, the process advances to step S2102, and the CPU 401 of the server apparatus 350 transmits a limited Web page to the PC 300. The limited Web page may not include, for example, the function of the message board, the download function of game data, and the like. Alternatively, the limited Web pages may be a general product introduction page which can be accessed by users on the Internet without limitation.

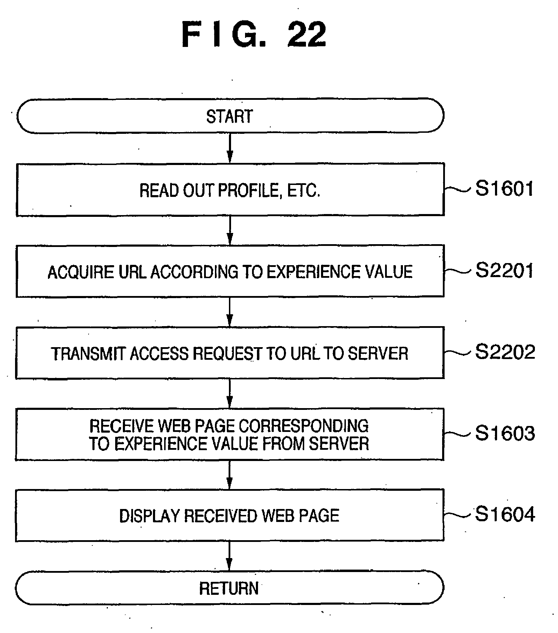

Fig. 22 is another exemplary flowchart showing the access processing according to the embodiment. In Fig. 16, the server apparatus 350 dynamically prepares a Web page according to the experience value. This embodiment adopts a method of acquiring a URL according to the experience value by the PC 300, and accessing that URL. Note that the same step numbers denote the processes common to those in the flowchart of Fig. 16 for the sake of simplicity.

In step S2201, the CPU 401 of the PC 300 acquires a URL according to the experience value read out from the game apparatus 100. For example, assume that the experience values and URLs to be accessed are stored in advance in the HDD 407 in association with each other. In step S2202, the CPU 401 transmits a request of a Web page based on the acquired URL to the server apparatus 350. After that, the Web page according to the experience value can be acquired in step S1603.

The present invention is not limited to the above embodiments and various changes and modifications can be made within the spirit and scope of the present invention. Therefore to apprise the public of the scope of the present invention, the following claims are appended.

## Claims

1. A portable game apparatus (100, 100a) comprising:
a general-purpose interface (208) adapted to connect a personal computer (300);
a communication interface (204) adapted to communicate with another game apparatus (100b) as an opponent of a fighting game;
a storage unit (202, 203) adapted to store game data received via said general-purpose interface;
an execution control unit (201) adapted to execute the fighting game using the game data with the other portable game apparatus connected via said communication interface;
an input unit (206) adapted to input at least an instruction associated with the fighting game; and
a display unit (205) adapted to display at least execution contents of the fighting game.

2. The apparatus according to claim 1, wherein a total size of all game data available in the fighting game exceeds a storage capacity of said storage unit, and
game data which cannot be stored in said storage unit of the game data are stored in a storage device of the personal computer connected via said general-purpose interface, and the personal computer moves arbitrary game data stored in said storage unit of said game apparatus to the storage device of the personal computer, thereby storing arbitrary other game data stored in the storage device of the personal computer in said storage unit.

3. The apparatus according to claim 1, wherein the fighting game is a game in which a parameter of a player is changed along with progress of the game, and a team which is organized by the player and includes one or more game characters fights with another team in the other portable game apparatus, and
upon organizing the team, said execution control unit calculates a total value of levels given in advance to the game characters to be included in the team to be organized, and permits the player to select the game characters within a range in which the total value is not more than the parameter of the player.

4. The apparatus according to claim 1, wherein the personal computer is a portable phone.

5. The apparatus according to claim 1, wherein said execution control unit changes a rate of rise of a parameter of a player according to times.

6. The apparatus according to claim 1, wherein said execution control unit sets a display direction of said display unit to agree with a first direction upon inputting an instruction to the fighting game, and sets the display direction of said display unit to agree with a second direction different from the first direction upon fighting with the other portable game apparatus.

7. The apparatus according to claim 6, wherein the first direction and the second direction are different through approximately 90°.

8. The apparatus according to claim 6, wherein the second direction is a direction in which said communication interface faces a communication interface of the other portable game apparatus.

9. A game system which comprises a portable game apparatus (100) according to claim 1, a personal computer (300) to which said portable game apparatus is connected, and a server apparatus (350) connected to said personal computer, wherein
said personal computer comprises:
a unit (408) for, when said portable game apparatus is connected, reading out a parameter which is changed along with progress of a fighting game from said portable game apparatus;
a unit (404) for transmitting the parameter to said server apparatus; and
a unit (405) for displaying a Web page received from said server apparatus, and
said server apparatus comprises a unit (404) for transmitting Web pages which are different depending on reception and non-reception of the parameter to said personal computer.

10. A game system which comprises a portable game apparatus (100) according to claim 1, a personal computer (300) to which said portable game apparatus is connected, and a server apparatus (350) connected to said personal computer, wherein
said personal computer comprises:
a unit (408) for, when said portable game apparatus is connected, reading out a parameter which is changed along with progress of a fighting game from said portable game apparatus;
a unit (404) for accessing a Web page according to the parameter of a plurality of Web pages provided by said server apparatus; and
a unit (405) for displaying the Web page, and
said server apparatus comprises:
a unit (404) for transmitting the plurality of Web pages according to the parameter to said personal computer.

11. The system according to claim 9 or 10, wherein the Web page according to the parameter is a Web page which can be accessed by only players having identical or approximate parameters.

12. The system according to claim 9 or 10, wherein the Web page according to the parameter includes an image having a relatively higher resolution than game data displayed on a display unit of said portable game apparatus in association with the game data associated with said portable game apparatus.

13. A game system which comprises a portable game apparatus (100) according to claim 1, a personal computer (300) to which said portable game apparatus is connected, and a server apparatus (350) connected to said personal computer, wherein
said personal computer comprises:
a unit (404) for, when said portable game apparatus is connected, transmitting predetermined information read out from said portable game apparatus or connected information indicating that said portable game apparatus is connected to said server apparatus; and
a unit (405) for displaying a Web page received from said server apparatus, and
said server apparatus comprises:
a unit (404) for, when the predetermined information or the connected information is received, transmitting a first Web page to said personal computer, and for, when the predetermined information or the connected information is not received, transmitting a second Web page different from the first Web page.

14. A computer program for a portable game apparatus, **characterized by** comprising:
a step (S1510) of receiving game data used in a fighting game from a personal computer (300) via a general-purpose interface (208);
a step (S1510) of storing the game data received via the general-purpose interface (208) in a storage unit;
a step (S1202) of communicating with another portable game apparatus as an opponent of the fighting game via a communication interface (204);
a step (S508) of executing the fighting game using the game data with the other portable game apparatus connected via the communication interface;
a step (S1203, S1206) of inputting at least an instruction associated with the fighting game via an input unit; and
a step (S1203) of displaying at least execution contents of the fighting game.

15. A computer program, which is executed by a personal computer (300) connected to a portable game apparatus (100), **characterized by** comprising:
a step (S1601) of reading out, when the portable game apparatus is connected, a parameter which is changed along with progress of a fighting game from the portable game apparatus using read-out unit;
a step (S1602) of transmitting, using transmission unit, the parameter to a server apparatus which transmits Web pages that are different between a case in which the server apparatus is connected to the personal computer and receives the parameter, and a case in which the server apparatus does not receive the parameter; and
a step (S1603, S1604) of displaying, using display unit, a Web page received from the server apparatus.

16. A computer program, which is executed by a personal computer (300) connected to a portable game apparatus (100), **characterized by** comprising:
a step (S1601) of reading out, when the portable game apparatus is connected to the personal computer, an experience value from the portable game apparatus using read-out unit;
a step (S2201, S2202) of accessing a Web page according to the experience value using access unit of a plurality of Web pages provided by a server apparatus connected to the personal computer; and
a step (S1603, S1604) of displaying the Web page using display unit.

17. A computer program, which is executed by a personal computer (300) connected to a portable game apparatus (100), **characterized by** comprising:
a step (S1601) of detecting, using detection unit, whether or not the portable game apparatus is connected to the personal computer;
a step (S1602) of transmitting, when the portable game apparatus is connected to the personal computer, predetermined information read out from the portable game apparatus or connected information indicating that the portable game apparatus is connected, using transmission unit, to a server apparatus (350) which transmits a first Web page to the personal computer when the server apparatus receives the predetermined information read out from the portable game apparatus or the connected information indicating that the portable game apparatus is connected (S1701, S1704), and transmits a second Web page different from the first Web page to the personal computer when the server apparatus does not receive the predetermined information or the connected information (S1705, S2102); and
a step (S1603, S1604) of displaying the Web page received from the server apparatus using display unit.

18. A method of executing a fighting game in a portable game apparatus (100), **characterized by** comprising:
a step (S1510) of receiving game data used in a fighting game from a personal computer via a general-purpose interface (208);
a step (S1510) of storing the game data received via the general-purpose interface in a storage unit;
a step (S1202) of communicating with another portable game apparatus as an opponent of the fighting game via a communication interface (204);
a step (S508) of executing the fighting game using the game data with the other portable game apparatus connected via the communication interface;
a step (S1203, S1206) of inputting at least an instruction associated with the fighting game via an input unit; and
a step (S1203) of displaying at least execution contents of the fighting game.

19. A display method of a Web page, which is executed by a personal computer (300) connected to a portable game apparatus (100), **characterized by** comprising:
a step (S1601) of reading out, when the portable game apparatus is connected, a parameter which is changed along with progress of a fighting game from the portable game apparatus using read-out unit;
a step (S1602) of transmitting, using transmission unit, the parameter to a server apparatus which transmits Web pages that are different between a case in which the server apparatus is connected to the personal computer and receives the parameter, and a case in which the server apparatus does not receive the parameter; and
a step (S1603, S1604) of displaying, using display unit, a Web page received from the server apparatus.

20. A display method of a Web page, which is executed by a personal computer (300) connected to a portable game apparatus (100), **characterized by** comprising:
a step (S1601) of reading out, when the portable game apparatus is connected to the personal computer, an experience value from the portable game apparatus using read-out unit;
a step (S2201, S2202) of accessing a Web page according to the experience value using access unit of a plurality of Web pages provided by a server apparatus connected to the personal computer; and
a step (S1603, S1604) of displaying the Web page using display unit.

21. A display method of a Web page, which is executed by a personal computer (300) connected to a portable game apparatus (100), **characterized by** comprising:
a step (S1601) of detecting, using detection unit, whether or not the portable game apparatus is connected to the personal computer;
a step (S1602) of transmitting, when the portable game apparatus is connected to the personal computer, predetermined information read out from the portable game apparatus or connected information indicating that the portable game apparatus is connected, using transmission unit, to a server apparatus (350) which transmits a first Web page to the personal computer when the server apparatus receives the predetermined information read out from the portable game apparatus or the connected information indicating that the portable game apparatus is connected (S1701, S1704), and transmits a second Web page different from the first Web page to the personal computer when the server apparatus does not receive the predetermined information or the connected information (S1705, S2102); and
a step (S1603, S1604) of displaying the Web page received from the server apparatus using display unit.
